Europäisches Patentamt

(19) European Patent Office

Office européen des brevets

(11) Publication number: **0 062 535**
**B1**

(12) **EUROPEAN PATENT SPECIFICATION**

(45) Date of publication of patent specification: **26.11.86**

(51) Int. Cl.⁴: **F 16 D 23/14**

(21) Application number: **82301817.1**

(22) Date of filing: **06.04.82**

(54) **A self-centring clutch release device.**

(30) Priority: **06.04.81 GB 8110721**

(43) Date of publication of application:
**13.10.82 Bulletin 82/41**

(45) Publication of the grant of the patent:
**26.11.86 Bulletin 86/48**

(84) Designated Contracting States:
**DE FR IT**

(56) References cited:
**DE-A-2 200 684**
**FR-A-2 190 213**
**FR-A-2 465 120**
**GB-A- 385 039**
**GB-A-2 045 382**
**US-A-2 544 631**

(73) Proprietor: **SKF (U.K.) LIMITED**
**Sundon Park Road**
**Luton Bedfordshire LU3 3BL (GB)**

(72) Inventor: **Beton, Gordon Michael**
**57 Evelyn Road**
**Dunstable Bedfordshire LU5 4QN (GB)**

(74) Representative: **Bushell, John Stephen et al**
**Boult, Wade & Tennant 27 Furnival Street**
**GB-London EC4A 1PQ (GB)**

Courier Press, Leamington Spa, England.

## Description

This invention concerns a self-centring clutch release device comprising a sliding sleeve, an abutment surface fixed with respect to the sleeve and facing one end of the sleeve, a groove in the outer surface of the sleeve between the abutment surface and the said one end of the sleeve, a resilient retaining ring engaging in the groove and an annular element surrounding the sleeve and having limited radial movement with respect to the sleeve, the retaining ring urging the annular element towards the abutment surface whereby the annular element is frictionally held between the retaining ring and the abutment surface.

When assembling an engine, clutch and gearbox, misalignment between these components cannot be avoided. Compensation for the off-centre misalignment between the clutch and the clutch release bearing assembly occurs as soon as the rotating ring of the bearing is brought into contact with the clutch disengaging elements. To maintain the bearing in the radially aligned position when the clutch is engaged, that is, when the bearing no longer contacts the clutch disengaging elements, an axial force is applied usually by various spring means to the non-rotating bearing ring to frictionally hold the non-rotating bearing ring against an abutment surface of the sliding sleeve or bearing carrier.

A self-centring clutch release device in accordance with the prior art is shown in patent specification FR—A—2465120. In one embodiment the sleeve has a small integral collar and a radially inwardly extending flange of the outer race ring of a bearing abuts the collar axially. The inner periphery of an abutment plate is held between the flange and a resilient ring engaging in a groove. The resilient ring has a plurality of radially inwardly extending fingers. In another embodiment, the inner race ring of a bearing abuts the collar axially. The inner periphery of an abutment plate is clamped between the other end of the inner race ring and a resilient split ring engaging in a groove. The inner periphery of the abutment plate comprises a number of resilient radially inwardly extending fingers axially deformed between the resilient split ring and the inner race ring so that the race ring is frictionally held between the collar and resilient split ring. The resilient fingers used in such self-centring· clutch release bearings have a purely axial action. The problem with any purely axially acting spring is that of assembly since it has to be compressed against a surface and fitted at the same time into a groove. Also it is difficult to gauge the spring rate.

Retaining rings or circlips having a bevelled inner edge are known *per se*.

The prior art also includes a clutch release device incorporating a circlip having a bevelled inner edge — see patent specification GB—A—385 039 (Stanley). However this device is not self-centring.

The invention is characterised in that the resilient retaining ring is radially resilient and that it is kept in radial tension in the groove which has an inclined surface co-operating with an inclined surface of the retaining ring so that, on contraction of the retaining ring, the co-operating inclined surfaces move the retaining ring axially towards the abutment surface.

The clutch release device according to the invention is easy to assemble. The said one end of the sleeve is inserted through the annular element until the latter is in contact with the abutment surface. Then the retaining ring is radially expanded and the said one end of the sleeve is inserted through it until it can contract into the groove. Thereon, the co-operating inclined surfaces cause the retaining ring to move towards the abutment surface until the annular element is gripped between the retaining ring and the abutment surface.

By having the annular element — inner race ring or housing flange — between the retaining ring and the abutment surface of the sliding sleeve, the bearing can be smaller and consequently lighter and cheaper. Cost is also reduced by not having a groove in the bore of the inner race ring.

The annular element may directly or indirectly contact both the retaining ring and the abutment surface. A washer, for example, may be placed between the annular element and the abutment surface, and/or a washer may be placed between the annular element and the retaining ring. Such washers may be used so that with the same sleeve and retaining ring, different sizes of annular elements may be accommodated. Such washers may also provide additional frictional force between the retaining ring, annular element and abutment surface.

The annular elements may be a bearing inner race ring. In a construction with a rolling bearing disposed around the sliding sleeve and the inner race ring frictionally held between the retaining ring and the abutment surface, the outer race ring is preferably extended axially in the direction from the abutment surface to the said one end of the sleeve in order to provide a surface for engaging the clutch disengaging elements. When assembling such a construction, the retaining ring is radially expanded to pass between the outer surface of the said one end of the sleeve and the inner surface of the outer race ring.

The annular element may be a cup having a radial flange lying between the retaining ring and the abutment surface, an annular portion extends axially from the radially outer periphery of the flange towards the said one end of the sleeve, and a bearing outer race ring is held in the bore of the annular portion of the cup.

Once the cup is in position, the retaining ring is radially expanded to pass between the outer surface of the said one end of the sleeve and the inner surface of the annular portion of the cup.

When the cup is installed with its flange frictionally held between the retaining ring and the abutment surface, a rolling bearing having inner and outer race rings can then be mounted in the bore of the annular portion of the cup, the outer race ring being for example a force fit in the bore of the annular portion. With the cup centered on the sleeve, there will be a radial clearance between the bearing and the sleeve.

The inclined surface of the retaining ring may be provided in the bore of the retaining ring, or may be provided on an axial end face of the retaining ring. The inclined surface of the latter retaining ring will usually have a larger cone angle than that of the former retaining ring so giving less axial travel.

Three embodiments of a clutch release device according to the invention will now be described by way of example, reference being made to the accompanying drawings of which:

Figure 1 is part of a longitudinal section through one embodiment of the invention;

Figure 2 is part of a longitudinal section through another embodiment of the invention; and

Figure 3 is part of a longitudinal section through a further embodiment of the invention.

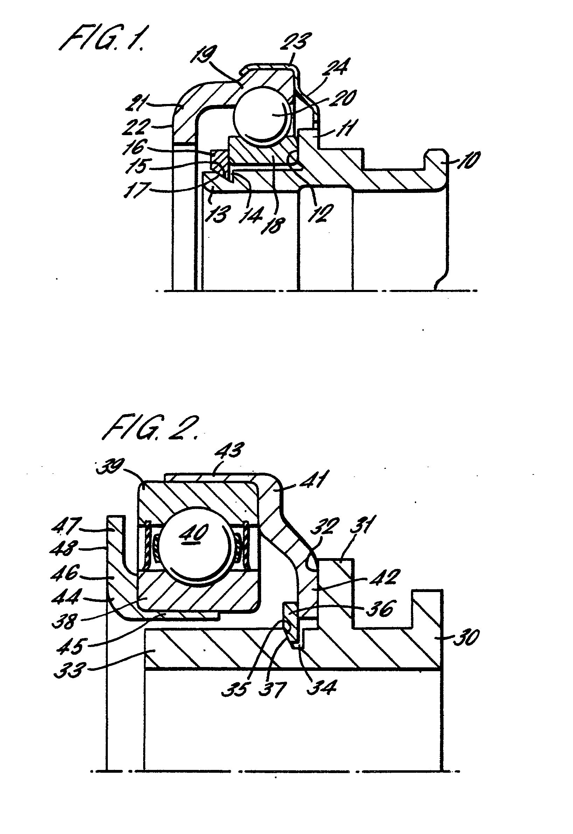

Referring to Figure 1, a clutch release device is shown comprising a sliding sleeve 10 having a radial flange 11 providing an abutment surface 12 fixed with respect to the sleeve and facing one end 13 of the sleeve. Between the abutment surface 12 and the end 13 of the sleeve 10, there is a groove 14 in the radially outer surface of the sleeve. The groove 14 has an inclined surface 15, which surface is conical and extends radially towards the axis of the sleeve 10 in an axial direction towards the abutment surface 12. A radially resiliently expansible retaining ring 16 is located in the groove 14 and has an inclined conical surface 17 in its bore co-operating with the inclined surface 15 of the groove 14. On contraction of the retaining ring 16 in the groove 14, the inclined surfaces 15 and 17 move the retaining ring axially towards abutment surface 12.

Disposed around the sleeve 10 is a radial deep groove ball bearing having inner and outer race rings 18 and 19 respectively and a plurality of balls 20 arranged to roll on the raceways of the race rings. The bearing is located with the inner race ring 18 frictionally held between the retaining ring 16 and the abutment surface 12 with a radial clearance between the inner race ring and the sleeve. The action of the retaining ring 16 is, upon its contraction into the groove 14, to urge the inner race ring 18 axially towards the abutment surface 12 so that the inner race ring is gripped by the retaining ring and the flange 11.

The outer ring race 19 is extended axially in the direction from the abutment surface 12 to the end 13 of the sleeve 10 and has radially inwardly extending portion 21 providing a surface 22 axially facing away from the bearing for engaging the disengaging elements of a clutch, for example the tongues of a clutch plate spring (not shown).

A sheet metal cover plate 23 is secured to the outer surface of the outer race ring 19 and has a portion 24 extending radially inwardly towards the flange 11 of the sleeve 10.

While the clutch is engaged, the surface 22 of the outer race ring 19 will not normally be contacted by the clutch disengaging elements. The clutch release device shown in Figure 1 is "self-centring" in that, when the clutch disengaging elements contact the surface 22 of the outer race ring 19 for disengagement of the clutch, the action of the clutch disengaging elements centres the bearing with respect to the clutch. The centred position, when the clutch disengaging elements are not contacting surface 22, is then maintained by the action of the retaining ring 16, with the inner race ring 18 gripped between the retaining ring and the abutment surface 12.

To assemble the clutch release device shown in Figure 1, the sleeve 10 and the complete bearing are provided and the bearing is passed over the end 13 of the sleeve until the inner race ring 18 contacts the abutment surface 12. Then the retaining ring 16 is provided and radially expanded until it can pass over the end 13 of the sleeve 10 and inside the bore of the portion 21 of the outer ring race 19. The retaining ring 16 is then located in groove 14 and allowed to contract whereupon the inner race ring 18 is frictionally held between the retaining ring 16 and the abutment surface 12.

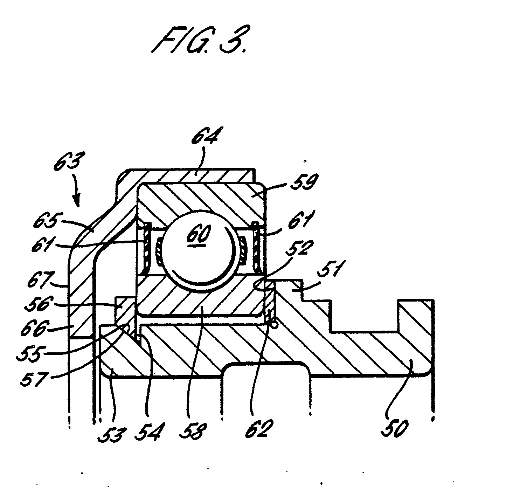

The embodiment shown in Figure 2 comprises a sliding sleeve 30 having a radial flange 31 providing an abutment surface 32 fixed with respect to the sleeve and facing one end 33 of the sleeve. Between the abutment surface 32 and the end 33 of the sleeve 30 there is a groove 34 in the radially outer surface of the sleeve. The groove 34 has an inclined surface 35, which surface is conical and extends radially towards the axis of the sleeve 30 in an axial direction towards the abutment surface 32. A radially resiliently expansible retaining ring 36 is located in the groove 34 and has an inclined conical surface 37 disposed on an axial end face of the retaining ring and co-operating with the inclined surface 35 of the groove 34. On contraction of the retaining ring 36 in the groove 34, the inclined surfaces 35 and 37 move the retaining ring axially towards the abutment surface 32.

Disposed around the sleeve 30 is a radial deep groove ball bearing having inner and outer race rings 38 and 39 respectively and a plurality of balls 40 arranged to roll on the raceways of the race rings.

A cup 41 is disposed around the sleeve 30 with radial clearance and has a radial flange 42 lying between and frictionally gripped by the retaining ring 36 and the abutment surface 32. The cup 41 has an annular portion 43 extending from the radially outer periphery of the flange 42 axially towards the end 33 of the sleeve 30.

The outer race ring 39 of the bearing is held in the bore of the annular portion 43 of the cup 41 by, for example, a light force fit between the outer surface of the outer race ring and the inner surface of the annular portion of the cap. (A light force fit is in accordance with B.S 1916: Part 1: 1953.) Instead, of a force fit, the outer race ring 39 may be secured in the bore of the annular portion 43 of the cup 41 by means of adhesive.

Secured to the inner race ring 38 is an annular member 44 having an annular portion 45 extending axially into the bore of the inner race ring, and a flange 46 extending from the annular portion radially outwardly. The flange 46 is disposed on the axial end of the bearing facing away from the abutment surface 32, and has a radially outer portion 47 which is axially spaced from that axial end of the bearing and bridges the gap between the two race rings 38 and 39. The annular member 44 may be secured to the inner race ring 38 by, for example, a hard force fit (in accordance with B.S. 1916: Part 1: 1953) or by means of adhesive. The radial flange 46 of the annular member 44 provides a surface 48 axially facing away from the bearing for contacting the disengaging elements of a clutch, for example, the tongues of a clutch plate spring (not shown). There is a radial clearance between the sleeve 30 and the annular portion 45 of the annular member 44.

The cup 41 and the annular member 44 can be pressed from sheet metal or forged from blanks to finished sizes.

While the clutch is engaged, the surface 48 of the annular member 44 will not normally be engaged by the clutch disengaging elements. The clutch release device shown in Figure 2 is "self-centring" in that, when the clutch disengaging elements contact the surface 48 of the annular member 44 for disengagement of the clutch, the action of the clutch disengaging elements centres the bearing with respect to the clutch. The centred position, when the clutch disengaging elements are not contacting surface 48, is then maintained by the action of the retaining ring 36, with the flange 42 of the cup 41 gripped between the retaining ring and the abutment surface 32.

To assemble the clutch release device shown in Figure 2, the sliding sleeve 30 and the cup 41 are provided, and the cup is passed over the end 33 of the sleeve until the flange 42 of the cup contacts the abutment surface 32 of the flange 31. Then the retaining ring 36 is provided and radially expanded until it can pass over the end 33 of the sleeve 30 and inside the bore of the annular portion 43 of the cup. The retaining ring 36 is then located in groove 34 and allowed to contract whereupon the flange 42 of the cup 41 is frictionally held between the retaining ring and the abutment surface 32.

The complete bearing is then provided with the annular member 44 secured to the inner race ring 38.

The bearing is then passed over the end 33 of the sleeve 30 and secured in the bore of the annular portion 43 of the cup 41.

The embodiment shown in Figure 3 comprising a sliding sleeve 50 having a radial flange 51 providing an abutment surface 52 fixed with respect to the sleeve and facing one end 53 of the sleeve. Between the abutment surface 52 and the end 53 of the sleeve 50 there is a groove 54 in the radially outer surface of the sleeve. The groove 54 has an inclined surface 55, which surface is conical and extends radially inwardly towards the axis of the sleeve 50 in an axial direction towards the abutment surface 52. A radially resiliently expansible retaining ring 56 is located in the groove 54 and has an inclined conical surface 57 in its bore co-operating with the inclined surface 55 of the groove 54. On contraction of the retaining ring 56 in the groove 54, the inclined surfaces 55 and 57 move the retaining ring axially towards the abutment surface 52.

Disposed with radial clearance around the sleeve 50 is a radial deep groove ball bearing having inner and outer race rings 58 and 59 respectively and a plurality of balls 60 arranged to roll on the raceways of the race rings. The bearing is sealed at each end by seals 61 located in grooves in the bore of the outer race ring 59 and rubbing on the radially outer surface of the inner race ring. The bearing is located with the inner race ring 58 frictionally held between the retaining ring 56 and a washer 62 abutting the abutment surface 52. The action of the retaining ring 56 is, upon its contraction into the groove 54, to urge the inner race ring axially towards the washer 62 and abutment surface 52 so that the inner race ring is gripped by the retaining ring and the washer.

Secured to the outer race ring 59 is an annular member 63 having a sleeve portion 64, engaging the radially outer surface of the outer race ring, and a flange 65 extending from the sleeve portion radially inwardly to overlap the end 53 of the sleeve 50. The flange 65 is disposed on the axial end of bearing facing away from the abutment surface 52 and has a radially inner portion 66 which is axially spaced from that axial end of the bearing and spaced from the end 53 of the sleeve 50. The annular member 63 may be secured to the outer race ring 59 by for example a force fit or by means of adhesive. The radial flange 65 of the annular member 63 provides a surface 67 axially facing away from the bearing for contacting the disengaging elements of a clutch, for example, the tongues of a clutch plate spring (not shown).

While the clutch is engaged, the surface 67 of the annular member 63 will not normally engage the clutch disengaging elements. The clutch release device shown in Figure 3 is "self-centring" in that, when the surface 67 of the annular member 63 engages the clutch disengaging elements for disengagement of the clutch, the action of the clutch disengaging elements centres the bearing with respect to the clutch. The centred position, when the surface 67 of the annular member 63 is not contacting the clutch disengaging elements, is then maintained by the action of the retaining ring 56 with inner race ring 58 gripped between the retaining ring and the abutment surface 52.

To assembly the clutch release device shown in Figure 3, the end 53 of the sleeve 50 is passed firstly through the bore of the washer 62 and then through the bore of the bearing until the washer contacts the abutment surface 52 of the flange 51 and the bearing contacts the washer. Then the retaining ring 56 is radially expanded until it can pass over the end 53 of the sleeve 50 and is then located in the groove 54 and allowed to contract whereupon the inner race ring 58 is frictionally held by the washer 62 and the retaining ring. The end face of the outer race ring 59 nearer to the flange 51 is then supported and the annular members 63 mounted as a press fit.

In both Figures 1, 2 and 3, a damping ring, for example, of plastics, can be disposed radially between the bearing and the sliding sleeve 10, 30, 50. In the embodiment of Figure 2, the damping ring can be disposed between the annular portion 45 of the member 44 and the sleeve 30. The damping ring can be secured either to the sleeve 10, 30, 50, or to the bearing and will be sized to ensure that there is still a radial clearance so that the bearing can still be centred. The damping ring will prevent the bearing from being damaged by impact with the sleeve in the event of shock loads.

In Figures 1, 2 and 3, the abutment surface 12, 32, 52, is provided by a flange 11, 31, 51, formed from the sleeve 10, 30, 50. Alternatively, the flange 11, 31, 51, can be a member formed separately from the sleeve 10, 30, 50 and then fixed to the sleeve.

In Figures 1 and 2, a washer can be provided between the retaining ring 16, 36 and the annular element 18, 41 and/or between the annular element 18, 41 and the abutment 12, 32.

In Figure 3 a washer can also be provided between the retaining ring 56 and the annular element 58, either instead of washer 62 or as well as washer 62. Such washers may be used to take up any axial spacing and allow, for the same sleeve and retaining ring, different sizes or thicknesses of annular element. Such washers may be roughened axial end faces and so provide an increase in the frictional force between the retaining ring, annular element and abutment surface. In any event, the abutment surface and the axially facing contact surfaces of the retaining ring and the annular element can be provided with roughened surfaces to increase the frictional force.

The retaining ring envisaged being used is of the type which does not form a complete circle and therefore has two ends adjacent to each other. The retaining ring can be assembled onto the sleeve using a conical tool or a pair of assembly pliers. To facilitate assembly with the use of assembly pliers, the retaining ring may have a hole in each of its ends.

By increasing only the outside diameter of the retaining ring, and not altering anything else, an increase in the spring rate is gained because the ring is thicker and thus harder to expand and thus there is a larger restoring force.

Once the retaining ring is in position, there is no further relative movement between the inclined surfaces of the ring and the groove which otherwise leads to fretting corrosion.

The advantages provided by the present invention are simplicity of structure and ease of assembly, both leading to cheapness of manufacture.

In the description of the embodiments it states that while the clutch is engaged, contact will not normally occur between the clutch disengaging elements and the clutch release device, but, of course, the invention can be used in arrangements where a small pressure is maintained between the clutch disengaging elements and the clutch release device when the clutch is engaged.

## Claims

1. A self-centring clutch release device comprising a sliding sleeve (10, 30, 50), an abutment surface (12, 32, 52) fixed with respect to the sleeve (10, 30, 50) and facing one end (13, 33, 53) of the sleeve, a groove (14, 34, 54) in the outer surface of the sleeve (10, 30, 50) between the abutment surface (12, 32, 52) and the said one end (13, 33, 53) of the sleeve, a resilient retaining ring (16, 36, 56) engaging in the groove (14, 34, 54) and an annular element (18, 41, 58) surrounding the sleeve (10, 30, 50) and having limited radial movement with respect to the sleeve (10, 30, 50), the retaining ring (16, 36, 56) urging the annular element (18, 41, 58) towards the abutment surface (12, 32, 52), whereby the annular element (18, 41, 58) is frictionally held between the retaining ring (16, 36, 56) and the abutment surface (12, 32, 52), characterised in that the resilient retaining ring (16, 36, 56) is radially resilient and that it is kept in radial tension in the groove (14, 34, 54) which has an inclined surface (15, 35, 55) co-operating with an inclined surface of the retaining ring (16, 36, 56) so that, on contraction of the retaining ring (16, 36, 56), the co-operating inclined surfaces (15, 35, 55 and respectively 17, 37, 57) move the retaining ring (16, 36, 56) axially towards the abutment surface (12, 32, 52).

2. A self-centring clutch release device as claimed in claim 1, characterised in that the annular element (18, 58) is a bearing inner race ring.

3. A self-centring clutch release device as claimed in claim 1, characterised in that the annular element (41) is a cup having a radial flange (42) lying between the retaining ring (36) and the abutment surface (32), an annular portion (43) extends axially from the radially outer periphery of the flange (42) towards the said one end (33) of the sleeve (30), and a bearing outer race ring (39) is held in the bore of the annular portion (43) of the cup (41).

## Patentansprüche

1. Selbstzentrierende Kupplungsausrückvorrichtung, bestehend aus einer Schiebehülse (10, 30, 50) mit einer Schulterfläche (12, 32, 52), die an der Schiebehülse (10, 30, 50) angeordnet und einer Stirnfläche (13, 33, 53) der Schiebehülse zugekehrt ist, und mit einer Ringnut (14, 34, 54) in der Mantelfläche der Schiebehülse (10, 30, 50) zwischen der Schulterfläche (12, 32, 52) und dieser Stirnfläche (13, 33, 53) der Schiebehülse, einem federnden Haltering (16, 36, 56), der in der Ringnut (14, 34, 54) angeordnet ist, und einem ringförmigen Element (18, 41, 58), das die Schiebehülse (10, 30, 50) umgibt und eine begrenzte radiale Bewegungsmöglichkeit in Bezug auf die Schiebehülse (10, 30, 50) hat, wobei der Haltering (16, 36, 56) das ringförmige Element (18, 41, 58) gegen die Schulterfläche (12, 32, 52) drückt und das ringförmige Element (18, 41, 58) durch Reibung zwischen dem Haltering (16, 36, 56) und der Schulterfläche (12, 32, 52) gehalten ist, dadurch gekennzeichnet, daß der federnde Haltering (16, 36, 56) radial federnd ist und daß er unter radialer Spannung in der Ringnut (14, 34, 54) gehalten ist, die eine geneigte Seitenfläche (15, 35, 55) aufweist, welche mit einer geneigten Fläche des Halterings (16, 36, 56) so zusammenwirkt, daß beim Zusammenziehen des Halteringes (16, 36, 56) die zusammenwirkenden geneigten Flächen (15, 35, 55 bzw. 17, 37, 57) den Haltering (16, 36, 56) axial gegen die Schulterfläche (12, 32, 52) bewegen.

2. Selbstzentrierende Kupplungsausrückvorrichtung nach Anspruch 1, dadurch gekennzeichnet, daß das ringförmige Element (18, 58) ein Lagerinnenring ist.

3. Selbstzentrierende Kupplungsausrückvorrichtung nach Anspruch 1, dadurch gekennzeichnet, daß das ringförmige Element (41) eine Büchse ist, die einen radialen Flansch (42), der zwischen dem Haltering (36) und der Schulterfläche (32) liegt und einen ringförmigen Abschnitt (43), der sich von der radial außen liegenden Umfangsfläche des Flansches (42) in axialer Richtung gegen die Stirnfläche (33) der Schiebehülse (30) erstreckt, aufweist und daß ein Lageraußenring (39) in der Bohrung des ringförmigen Abschnittes (43) der Büchse (41) angeordnet ist.

**Revendications**

1. Dispositif de débrayage auto-centreur comprenant un manchon coulissant (10, 30, 50), une surface de butée (12, 32, 52) fixe par rapport au manchon (10, 30, 50) et faisant face à une première extrémité (13, 33, 53) du manchon, une gorge (14, 34, 54) située dans la surface extérieure du manchon (10, 30, 50) entre la surface de butée (12, 32, 52) et ladite première extrémité (13, 33, 53) du manchon, un anneau élastique de retenue (16, 36, 56) logé dans la gorge (14, 34, 54) et un élément annulaire (18, 41, 58) entourant le manchon (10, 30, 50) et pouvant effectuer un mouvement radial limité par rapport au manchon (10, 30, 50), l'anneau de retenue (16, 36, 56) poussant l'élément annulaire (18, 41, 58) vers la surface de butée (12, 32, 52), de manière que l'élément annulaire (18, 41, 58) soit maintenu à frottement entre l'anneau de retenue (16, 36, 56) et la surface de butée (12, 32, 52), caractérisé en ce que l'anneau élastique (16, 36, 56) de retenue est radialement élastique et en ce qu'il est maintenu en traction radiale dans la gorge (14, 34, 54) qui présente une surface inclinée (15, 35, 55) coopérant avec une surface inclinée de l'anneau de retenue (16, 36, 56) de manière que, lors d'une contraction de l'anneau de retenue (16, 36, 56), les surfaces inclinées coopérantes (15, 35, 55 et 17, 37, 57 respectivement) déplacent axialement, l'anneau de retenue (16, 36, 56) vers la surface de butée (12, 32, 52).

2. Dispositif de débrayage auto-centreur selon la revendication 1, caractérisé en ce que l'élément annulaire (18, 58) est une bague intérieure de palier.

3. Dispositif de débrayage auto-centreur selon la revendication 1, caractérisé en ce que l'élément annulaire (41) est une coupelle comportant une bride radiale (42) s'étendant entre l'anneau (36) de retenue et la surface de butée (32), une partie annulaire (43) s'étendant axialement de la périphérie radialement extérieure de la bride (42) vers ladite première extrémité (33) du manchon (30), et une bague extérieure (39) de palier est maintenue dans l'alésage de la partie annulaire (43) de la coupelle (41).

FIG. 1.

FIG. 2.

# FIG. 3.